Europäisches Patentamt

European Patent Office

Office européen des brevets

(19)

(11) Numéro de publication: **0 262 694**
**A1**

(12)

# DEMANDE DE BREVET EUROPEEN

(21) Numéro de dépôt: 87201231.5

(22) Date de dépôt: 26.06.87

(51) Int. Cl.³: **E 04 D 5/14**
**F 16 B 5/06**

(30) Priorité: 30.09.86 BE 2061063

(43) Date de publication de la demande:
06.04.88 Bulletin 88/14

(84) Etats contractants désignés:
DE FR GB LU NL

(71) Demandeur: Van Hoof, Gustaaf
Bethovenstraat 62
B-2160 Brecht(BE)

(72) Inventeur: Van Hoof, Gustaaf
Bethovenstraat 62
B-2160 Brecht(BE)

(74) Mandataire: Donné, Eddy
M.F.J.Bockstael Arenbergstraat 13
B-2000 Anvers(BE)

(54) Revêtement de toit amélioré, profil utilisé à cet effet et procédé de réalisation de ce revêtement de toit.

(57) Le revêtement comporte des bandes (2) disposées côte à côte et se recouvrant, dont les parties en recouvrement sont fixées, de mainière étanche à l'eau, à une surface de toit ou à un profil (3) encastré dans la surface de toit.

Fig. 2

EP 0 262 694 A1

REVETEMENT DE TOIT AMELIORE, PROFIL UTILISE A CET EFFET
ET PROCEDE DE REALISATION DE CE REVETEMENT DE TOIT

La présente invention concerne un revêtement de toit amélioré. Cette invention concerne également des éléments utilisés pour obtenir ce revêtement de toit et des procédés pour sa réalisation.

Plus spécialement encore, la présente invention se rapporte à des éléments de toit tels qu'ils sont réalisés traditionnellement par le placement côte à côte avec recouvrement, de bandes ou de lames de matériaux de revêtement de toiture et, plus particulièrement, feuilles de caoutchouc, de feuilles de matière plastique ou matériaux analogues dans lesquels les parties se recouvrant l'une l'autre de ces bandes sont assemblées les unes aux autres par soudage à chaud, collage ou autre procédé.

Quoique les revêtements de toit déjà connus en soi satisfassent relativement bien aux exigences, ils présentent toutefois un grand inconvénient, du fait que l'on peut travailler, au maximum, une huitaine de mois par an en moyenne pour réaliser ces revêtements, vu qu'ils ne peuvent être appliqués que lorsque le temps est sec.

On a déjà proposé d'éviter ces inconvénients en fixant les bandes de matériau au toit au moyen de lattes et en rabattant successivement les bandes de matériau autour de ces lattes, pour assurer ainsi l'étanchéité du toit.

Quoiqu'une étanchéité de toiture obtenue de cette manière soit très efficace, on a constaté que sa réalisation demande relativement beaucoup de temps.

La présente invention a donc pour objet un revêtement de toiture qui n'est pas seulement efficace du point de vue de l'étanchéité à l'eau mais qui peut également être mis en oeuvre pendant toute l'année, quel que soit le temps, tout en étant également très facile à réaliser.

A cet effet, l'invention prévoit des bandes placées côte à côte et se recouvrant l'une l'autre 2, dont les parties à recouvrement sont fixées de manière étanche à l'eau sur une surface de toiture ou dans un profil inséré dans la surface de toiture.

Un profil suivant la présente invention est constitué dans un mode de réalisation préféré (voir revendication ...)

Afin de mieux faire comprendre les caractéristiques de la présente invention, on décrira ci-après, à titre d'exemple et sans aucun caractère limitatif, un mode de réalisation préféré, en se référant aux figures en annexe, qui représentent respectivement :

La figure 1, une vue schématique par le dessus d'une surface de toiture suivant la présente invention;

La figure 2, une coupe à plus grande échelle, suivant la ligne II-II de la figure 1 ;

La figure 3, une vue semblable à celle de la figure 2, mais avant la fixation du matériau de recouvrement de toiture.

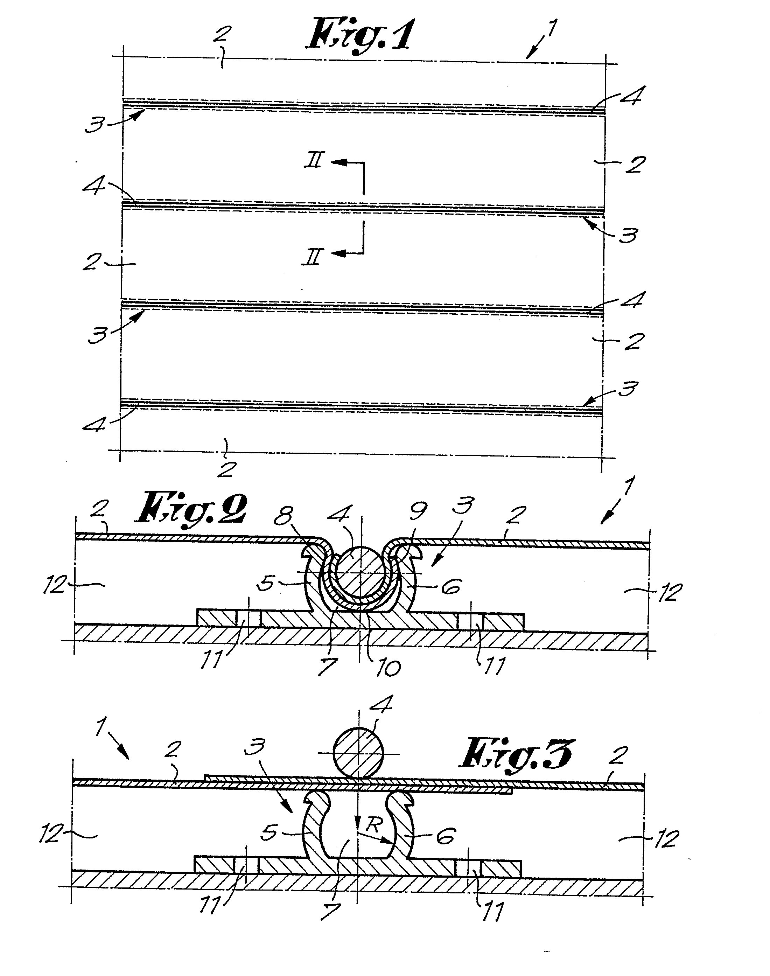

La figure 1 représente, de manière schématique, une surface de toiture 1 qui est constituée d'un certain nombre de bandes parallèles 2, qui sont disposées sur la surface du toit, conformément à l'invention.

Comme le montrent les figures 2 et 3, deux bandes 2 sont disposées en se recouvrant partiellement l'une l'autre au-dessus d'un profil 3, conformément à l'invention, ce profil lui-même étant fixé de manière appropriée à la surface de toit après qu'une barre 4 qui a, de préférence, la même longueur que les bandes 2, a été insérée ou chassée entre les lèvres 5 et 6 du profil, si bien que, comme le montre la figure 2, les parties se recouvrant l'une l'autre des bandes 2 sont insérées dans l'espace 7 du profil et entre la barre 4 et les lèvres 5 et 6, avec un serrage tel et, de préférence, en trois endroits, respectivement 8 et 9, qu'on obtient une fixation parfaitement étanche à l'eau des bandes sur le toit.

La barre 4 peut être réalisée en n'importe quel matériau, par exemple, en matière plastique.

Le diamètre de la barre 4 par rapport à l'épaisseur du matériau des bandes 2 et du rayon R de l'espace 7 est choisi de façon à ce que le matériau utilisé pour réaliser les bandes 2 soit inséré, en quelque sorte, d'une part, et que les lèvres 5 et 6 soient déformées, en quelque sorte, d'autre part, de façon à obtenir un joint très efficace.

Dans un mode de réalisation préféré, le rayon R sera égal, par exemple, à 4 mm tandis que la barre 4 aura un diamètre de 6 mm et que les bandes 2 auront une épaisseur de 1 mm.

Le profil 3 est réalisé, de préférence, en une matière plastique appropriée et est pourvu de trous 11, permettant la fixation au moyen de rivets, de vis, de clous ou d'éléments analogues sur la surface de toit proprement dite. Ce profil peut également être collé sur la surface du toit.

Dans le cas de nouvelle construction, les profils 3 peuvent évidemment être encastrés dans la surface du toit, soit directement dans le béton, soit dans la couche de chape.

Il est évident que les extrémités libres des bandes extrêmes 2 et des bandes 3 peuvent être travaillées d'une manière classique pour la jonction avec un mur montant ou élément analogue qui limite la surface de toit.

Pour assurer l'étanchéité du toit à l'extrémité des bandes 2, on peut utiliser des éléments à roue d'étanchéité ou bien des bandes transversales, qui viennent se placer sur les extrémités des bandes 2, ou bien encore des pièces spéciales en "T" qui se raccordent aux profils 3 et dans lesquelles sont fixées des bandes transversales, de la même manière que pour les profils 3.

Il est évidemment possible que l'espace 12 entre le toit et les bandes 2 qui y sont fixées de cette manière peut être rempli de n'importe quel matériau, par exemple et de préférence, d'un matériau isolant.

Il est également évident que les bandes 2 peuvent être pourvues de colle ou produit analogue à l'endroit des parties se recouvrant l'une l'autre, afin d'obtenir une étanchéité supplémentaire par rapport aux profils 3.

La présente invention ne se limite aucunement à l'exemple décrit et au mode de réalisation représenté par les figures, mais cette construction de toiture, ainsi que les profils utilisés à cet effet, peuvent être réalisés sous diverses formes et dimensions sans sortir du cadre de la présente invention.

REVENDICATIONS

1. Revêtement de toiture amélioré, caractérisé en ce qu'il est constitué de bandes (2) disposées côte à côte et se recouvrant l'une l'autre, dont les parties en recouvrement sont fixées de manière étanche à l'eau dans une surface de toit ou dans un profil (3) encastré dans la surface de toit.

2. Revêtement de toit amélioré selon la revendication 1, caractérisé en ce que les parties se recouvrant l'une l'autre des bandes (2) sont fixées au moyen d'une barre (4) dans un espace (7) en forme de "U" d'un profil (3) fixé à la surface du toit ou encastré dans la surface du toit avec serrage étanche à l'eau.

3. Revêtement de toit amélioré selon la revendication 1 ou 2, caractérisé en ce qu'un revêtement est prévu entre la surface de toit et les bandes (2), par exemple en matériau isolant.

4. Revêtement de toit amélioré selon l'une des revendications 1 à 3, caractérisé en ce que le profil (3) est constitué principalement d'un élément en forme de "U" constitué d'une base et de deux lèvres cintrées (5 et 6).

5. Revêtement de toit amélioré selon la revendication 4, caractérisé en ce que le profil (3) est constitué principalement d'une base pourvue éventuellement de trous (11) permettant la fixation à la surface de toiture par collage, clouage, vissage ou méthode analogue.

6. Revêtement de toit amélioré selon la revendication 4, caractérisé en ce que l'espace (7) en forme de "U" détermine principalement des nervures (5 et 6) dont la paroi intérieure présente un rayon qui est légèrement plus faible que la somme du rayon de la barre à y fixer (4) augmenté de deux fois l'épaisseur de la matière d'une bande (2).

7. Procédé pour réaliser un revêtement de toit selon l'une des revendications précédentes, caractérisé en ce qu'il comporte la fixation à des intervalles réguliers sur la surface du toit de profils (3), le placement de bandes de matériau de revêtement de toit (2) parallèles et adjacentes recouvrant ces profils (3) à l'endroit de ces profils (3) et la fixation de ces parties en recouvrement dans un espace (7) de ce profil (3) au moyen d'une barre (4), l'une et l'autre opérations étant telles que lesdites parties en recouvrement des bandes (2) soient serrées de manière étanche à l'eau dans l'espace (7) du profil (3).

8. Procédé selon la revendication 7, caractérisé en ce que, aux extrémités libres des bandes (2) sont disposées des bandes transversales (3) qui se raccordent aux bandes (2) de manière étanche par collage, soudage ou procédé analogue.

9. Procédé selon l'une des revendications 7 ou 8, caractérisé en ce que l'espace (7) d'un profil (3) reçoit de la colle ou un produit analogue, permettant de coller le bord concerné d'une bande (2) au profil en question.

10. Procédé selon l'une des revendications 7 à 9, caractérisé en ce que de la colle ou un produit analogue est appliqué entre les parties se recouvrant l'une l'autre des bandes (2).

11. Procédé selon l'une des revendications précédentes, caractérisé en ce que les profils (3) sont fixés à la surface du toit par collage, rivetage, vissage, clouage ou procédé analogue.

12. Procédé selon l'une des revendications 1 à 6, caractérisé en ce que les profils (3) sont encastrés dans la surface du toit.

0262694

Fig.1

Fig.2

Fig.3

Office européen
des brevets

**RAPPORT DE RECHERCHE EUROPEENNE**

Numéro de la demande
0262694

EP 87 20 1231

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | DE-A-2 547 599 (FIEBERG)<br><br>* Pages 3,4; page 5, paragraphe 1; revendications 1,3; figures 1,2 * | 1,2,4, 7 | E 04 D 5/14<br>F 16 B 5/06 |
| Y | | 5,6,10 ,11,12 | |
| | --- | | |
| Y | GB-A-1 025 124 (JOWSEY)<br>* Page 2, lignes 50-95; page 3, lignes 13-24; figures 1-4,9 * | 6,12 | |
| | --- | | |
| Y | DE-A-2 208 822 (BENKERT)<br>* Page 7, paragraphe 2; figures 5,6,7 * | 5,11 | |
| | --- | | DOMAINES TECHNIQUES RECHERCHES (Int. Cl.4) |
| A | GB-A-2 138 882 (MONTAGU)<br><br>* Page 2, lignes 41-57; figures 1,2,4 * | 1,2,4, 5 | E 04 D<br>F 16 B<br>E 04 H |
| | --- | | |
| A | DE-C-1 475 102 (PERALT ANSTALT)<br><br>* Colonne 3, lignes 19-28; fig-ures 1,3-5 * | 1,2,7, 8 | |
| | --- | | |
| A | EP-A-0 051 735 (FIRESTONE)<br>* Page 6, lignes 18-35; page 7, lignes 1-3; figures 8,9 * | 9 | |
| | ---    -/- | | |

Le présent rapport de recherche a été établi pour toutes les revendications

| Lieu de la recherche | Date d'achèvement de la recherche | Examinateur |
|---|---|---|
| LA HAYE | 09-10-1987 | HENDRICKX X. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## Office européen des brevets

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 393 993 (CARON) <br> * Page 2, lignes 31-34; page 3, lignes 18-21,34-36; figures 1,4,16 * | 9,10 | |

----

DOMAINES TECHNIQUES RECHERCHES (Int Cl.4)

Le présent rapport de recherche a été établi pour toutes les revendications

| Lieu de la recherche | Date d'achèvement de la recherche | Examinateur |
|---|---|---|
| LA HAYE | 09-10-1987 | HENDRICKX X. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OFB Form 1503 03 82